# EUROPÄISCHE PATENTSCHRIFT

(11) **EP 0 976 472 B1**
(45) Veröffentlichungstag und Bekanntmachung des Hinweises auf die Patenterteilung: **21.05.2003**
(21) Anmeldenummer: 99113884.3
(22) Anmeldetag: 16.07.1999
(51) Int. Cl.: B21J 15/10, B64F 5/00, B23Q 41/04

(54) **Verfahren zur Herstellung, Ausrüstung und Ausstattung eines Flugzeugrumpfes und Vorrichtung zur Durchführung des Verfahrens**
Apparatus and method for fabricating and equipping an aircraft fuselage
Dispositif et procédé pour la fabrication et l'équipment d'un fuselage d'avion

(30) Priorität: 31.07.1998 DE 19834703
(43) Veröffentlichungstag der Anmeldung: 02.02.2000
(73) Patentinhaber: Airbus Deutschland GmbH, 21129 Hamburg (DE)
(72) Erfinder: Stoewer, Udo, Dipl.-Ing., 28355 Bremen (DE); Köhler, Bernd, Dipl.-Ing., 21629 Neu Wulmstorf (DE); Kosuch, Norbert, Dr., 21224 Rosengarten-Sottorf (DE)
(74) Vertreter: Hansmann, Dierk, Dipl.-Ing.

(56) Entgegenhaltungen:
- DE-A- 19 745 145
- US-A- 5 649 888
- US-A- 5 661 892

## Beschreibung

Die Erfindung betrifft ein Verfahren zur Herstellung, Ausrüstung und Ausstattung eines Flugzeugrumpfes und eine Vorrichtung zur Durchführung des Verfahrens.

Für die Fertigung eines Flugzeugrumpfes ist es derzeit üblich, zunächst großflächige gekrümmte Bauteile zu Rumpfsektionen zusammenzufügen, wie bereits aus DE 34 38 584 bekannt ist. Diese Rumpfsektionen werden üblicherweise mittels eines automatisch arbeitenden Orbitalnietsystems sowie manueller Arbeit zu Flugzeugrumpfteilen zusammengefügt. Eine solche Verbindungsstelle wird im Flugzeug als Quernaht bezeichnet. Das Orbitalnietsystem besteht aus einer automatischen Nietmaschine, die auf einer ringförmig um den Flugzeugrumpf verlaufenden Maschinenführung angeordnet ist. Das gesamte Orbitalnietsystem ist in Flugzeuglängsrichtung (x-Achse) verschiebbar.
Nach der Fertigung des Flugzeugrumpfes bzw. eines Flugzeugrumpfteiles aus mehreren Rumpfsektionen ist ein Wechsel zu mindestens einem Montageplatz für die Ausrüstungsmontage sowie nachfolgend zu mindestens einem Montageplatz für die Ausstattungsmontage vorgesehen. In der Ausrüstungsmontage werden Ausrüstungsteile, wie Rohrleitungen und Geräte eingebracht. Die Strukturkomponenten werden aufgerüstet. In der Ausstattungsmontage werden Ausstattungskomponenten, wie Isolierpakete, elektrische Leitungsbündel, Fußböden und Wandverkleidungen in den Flugzeugrumpf montiert. Üblich ist somit ein Fertigungsablauf, bei dem nacheinander die notwendigen Montagearbeiten an einem Flugzeugrumpf ausgeführt werden. Dies ist insbesondere aufgrund der außerordentlichen Maße eines Flugzeugrumpfes platz- und zeitaufwendig. Montageplätze mit den entsprechenden Haltevorrichtungen stellen große Investitionen dar und erfordern auch große und teure Gebäude. Die zur Zeit übliche Taktfertigung, bei der vorgegebene Fertigungsabschnitte an einem Bauplatz fertiggestellt werden und danach der Flugzeugrumpf zum nächsten Bauplatz verfahren wird, kann bei Problemen an einem Bauplatz den gesamte Fertigungsablauf stören und so Stillstandszeiten und Produktionsstau verursachen.

Der Erfindung liegt daher die Aufgabe zugrunde, den Fertigungsablauf zur Herstellung eines Flugzeuges zu optimieren und die durch den Stand der Technik bekannten Nachteile zu vermeiden.

Diese Aufgabe wird bei einem gattungsgemäßen Verfahren mit den im Patentanspruch 1 genannten Maßnahmen gelöst.

Dabei ist insbesondere von Vorteil, daß mit der Überlappung von Arbeitsschritten eine Verkürzung von Montagezeiten und somit eine Verkürzung von Durchlaufzeiten für die Flugzeugrumpffertigung erreicht wird.

Weiterbildungen und vorteilhafte Ausgestaltungen sind in den Unteransprüchen 2 bis 9 angegeben.

Im Patentanspruch 10 ist eine Vorrichtung zur Durchführung des Verfahrens angegeben. Die Unteransprüche 11 und 12 enthalten vorteilhafte Ausgestaltungen der Vorrichtung gemäß Anspruch 10.

In der Zeichnung ist ein Ausführungsbeispiel der Erfindung dargestellt, welches nachstehend anhand der Figuren 1 bis 4 näher beschrieben wird. In den Figuren sind gleiche Bauteile mit gleichen Bezugszeichen versehen.

Es zeigt
- Fig. 1: einen Bauplatz für eine Flugzeugrumpfmontage mit einer Nietzone in einer vereinfachten Seitenansicht,
- Fig. 2: den Arbeitsbereich eines Nietmaschinensystems innerhalb der Nietzone gemäß Fig. 1,
- Fig. 3: den Bauplatz gemäß Fig. 1 mit der Nietzone und einer weiteren Zone zur Flugzeugausrüstung und
- Fig. 4: den Bauplatz gemäß Fig. 3 mit der Nietzone, der weiteren Zone zur Flugzeugausrüstung und einer letzten Zone zur Flugzeugausstattung.

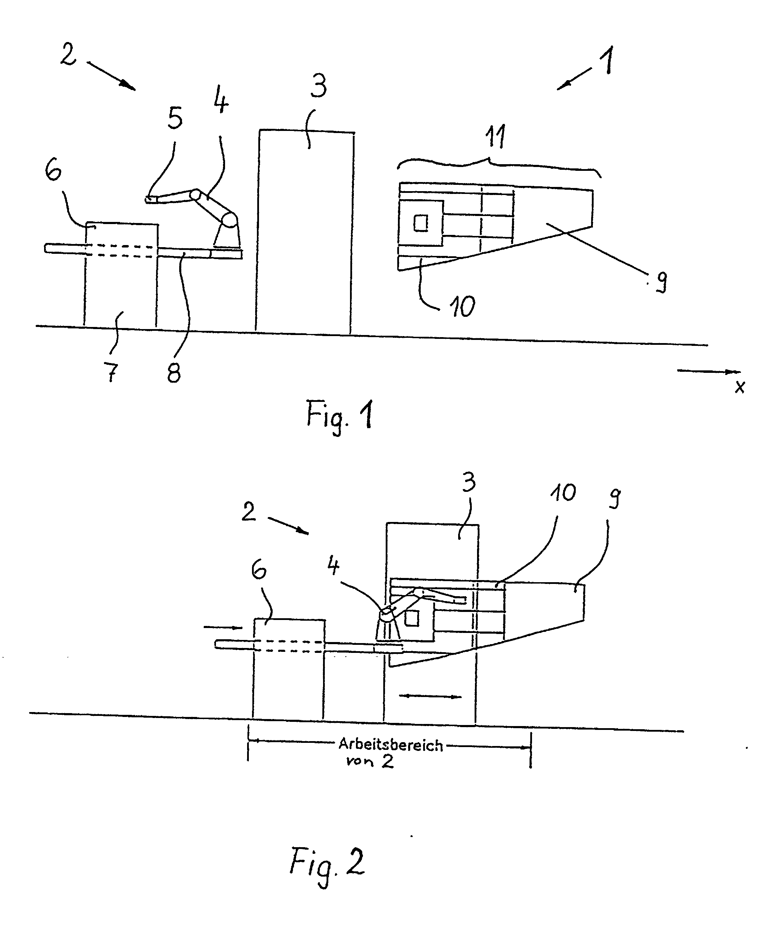

In Fig. 1 ist ein Bauplatz 1 für die Flugzeugrumpfmontage gezeigt. An dem Bauplatz 1 ist es möglich, nahezu gleichzeitig einen Flugzeugrumpf zu montieren, auszurüsten und auszustatten. Dafür ist der Bauplatz 1 im wesentlichen in drei Zonen aufgeteilt, wobei in Fig. 1 zunächst nur die Nietzone 2 gezeigt ist. Die Nietzone 2 besteht im wesentlichen aus einer Orbitalnietanlage 3 und einem Nietroboter 4. Die Orbitalnietanlage 3 weist eine automatische Nietmaschine (nicht gezeigt) auf, die auf einer ringförmig um den Flugzeugrumpf angeordneten Maschinenführung verfahren kann. Mit dieser Orbitalnietanlage 3 ist insbesondere das automatische Fertigen der Quernähte und Längsnähte eines Flugzeugrumpfes möglich. Die Nietmaschine innerhalb der Orbitalnietanlage 3 kann das Herstellen, Vorbereiten und Bestücken der Nietlöcher sowie das Herstellen der Nietverbindung realisieren. Ein Schließkopfwerkzeug 5, welches auf der Gegenseite der zu verbindenden Bauteile notwendig ist, wird am Nietroboter 4 angeordnet. Der Nietroboter 4 ist an einem Haltegestell 6 vorgesehen. Das Haltegestell 6 besteht im wesentlichen aus einem Tragarmständer 7 und einem Tragarm 8, wobei der Nietroboter 4 am freien Tragarmende des Tragarmes 8 angeordnet ist. Der Tragarm 8 ist in einer Führung im Tragarmständer 7 drehbar und kann in Flugzeuglängsrichtung (x-Achse) verfahren werden. Der Nietroboter 4 ist mehrachsig steuerbar und somit rechnergestützt im Zusammenwirken mit dem Haltegestell 6 an jeder Nietstelle innerhalb des Flugzeugrumpfes positionierbar. Das am Nietroboter 4 vorgesehene Schließkopfwerkzeug 5 ist vorzugsweise mit weiteren Werkzeugen auswechselbar, sodaß beispielsweise auch eine Nietmaschine gemäß DE 32 32 093 am Nietroboter 4 angeordnet werden kann. Ersichtlich ist in der Fig. 1 weiterhin eine Ausgangsstruktur 9, wie beispielsweise ein fertig montiertes Flugzeugheck. An diese Ausgangsstruktur 9 wird in der Nietzone 2 des Flugzeugrumpfmontageplatzes 1 eine erste Rumpfsektion 10 zu einem Flugzeugrumpfteil 11 angefügt.

In der Fig. 2 ist ersichtlich, wie die Rumpfsektion 10 im Arbeitsbereich der Nietzone 2 positioniert ist. Der Nietroboter 4 und die Orbitalnietanlage 3 sind innerhalb des Arbeitsbereiches rechnergestützt verfahrbar, sodaß jede Nietstelle automatisch erreicht wird. Die großflächigen Bauteile, üblicherweise Rumpfschalen, werden zuvor geheftet, sodaß sie bereits die Form der Rumpfsektion 10 bilden. Die Rumpfschalen werden in der Nietzone 2 automatisch mittels Längsnähte vernietet und mittels einer Quernaht mit der Ausgangsstruktur 9 verbunden. Denkbar ist auch, daß schon fertige Rumpfsektionen, die gemäß DE 34 38 584 an einem Vormontageplatz vernietet werden, in der Nietzone 2 an die bestehende Ausgangsstruktur 9 angefügt werden.

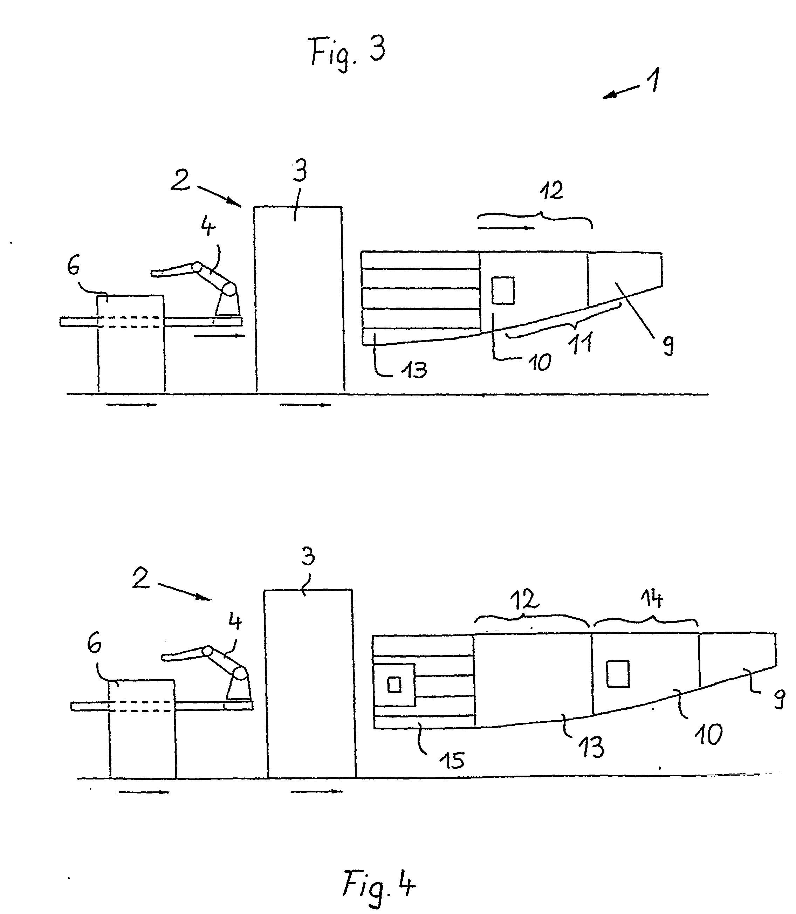

In Fig. 3 ist neben der Nietzone 2 eine Ausrüstungszone 12 des Flugzeugrumpfbauplatzes 1 ersichtlich. Nach Beendigung der Nietungen und Fertigstellung des entsprechenden Flugzeugrumpfteiles 11 wird die Rumpfsektion 10 aus der Nietzone 2 herausgefahren und befindet sich somit in der Ausrüstungszone 12 des Bauplatzes 1. Hier werden Ausrüstungskomponenten in den fertig genieteten Flugzeugrumpfteil 11 eingebracht. Ausrüstungskomponenten für das Flugzeug sind unter anderem Rohrleitungen und Geräte für Hydraulik-, Wasser-, Klima-, Sauerstoffsysteme und weitere Strukturkomponenten. Gleichzeitig wird in der Nietzone 2 eine weitere Rumpfsektion 13 an das Rumpfteil 11 angeordnet. Die zweite Rumpfsektion 13 ist geheftet und es werden in der Nietzone 2 die notwendigen Nietungen (entweder Längs- und Quernähte oder nur Quernähte) zum Fertigstellen und Anfügen der zweiten Rumpfsektion 13 an das bestehende Rumpfteil 11 vorgenommen. Um neben der automatischen Fertigung an der Rumpfsektion 13 das Ausrüsten im Bereich der Rumpfsektion vornehmen zu können, sind zwischen der Nietzone 2 und der Ausrüstungszone 12 Sicherungselemente - beispielsweise Abschirmungen - vorgesehen, um den Anforderungen an die Arbeitssicherheit zu genügen. Durch solche Abschirmungen wird insbesondere erreicht, daß Personen nicht in den Arbeitsbereich der Orbitalnietanlage 3 und des Nietroboters 4 gelangen.

Aus Fig. 4 ist ein weiterer Verfahrensschritt zur Herstellung, Ausrüstung und Ausstattung des Flugzeugrumpfes ersichtlich. In einer Ausstattungszone 14 kann ein genietetes, ausgerüstetes Rumpfstrukturteil - hier gezeigt die Rumpfsektion 10 - mit Ausstattungskomponenten versehen werden. Dafür ist nach Beendigung der Arbeiten in der Nietzone 2 und der Ausrüstungszone 12 das Flugzeugrumpfteil um einen Takt aus der Nietzone 2 zu verfahren und die in der Nietzone 2 genietete zweite Flugzeugrumpfsektion 13 befindet sich in der Ausrüstungszone 12 und die erste, genietete und ausgerüstete Flugzeugrumpfsektion 10 ist in der Ausstattungszone 14 positioniert. In der Ausstattungszone 14 werden Ausstattungskomponenten, wie Isolierpakete, elektrische Leitungsbündel, Fußböden und Wandverkleidungen, Flugzeugkabinenteile in die entsprechende Flugzeugrumpfsektion eingebracht. Gewisse Arbeiten in der Ausstattungsmontage sind aber auch separat durchführbar. Dies hängt von der Arbeitsorganisation sowie der notwendigen Montagearbeiten ab. So kann es sinnvoll sein, rumpfsektionsübergreifende Bauteile separat zu montieren. Parallel zur Ausstattung wird an der zweiten Rumpfsektion 13 die Ausrüstung mit Ausrüstungskomponenten in der Ausrüstungszone 12 vorgenommen. In der Nietzone 2 wird zur gleichen Zeit eine dritte Rumpfsektion 15 angefügt, wobei es vom Ausgangszustand abhängt, ob bei einer gehefteten Rumpfsektion Längsnähte und die Quernaht oder nur die Quemaht genietet werden. Mit der Parallelfertigung wird ein entscheidender Zeitvorteil erzielt. Während in einem Bereich der Flugzeugrumpf montiert wird, kann in einem weiteren Bereich schon ein Einbau von notwendigen Bauteilen erfolgen. Insbesondere bei der Montage eines Flugzeuges, welches insgesamt aus einer Vielzahl von Einzelteilen besteht, ist infolge der Verkürzung von Montagezeiten eine Verkürzung von Durchlaufzeiten erreichbar.
Die bisher beschriebenen Abläufe wiederholen sich so oft, bis die vorgegebenen Rumpfsektionen aneinandergefügt sind und eine Rumpftaktbewegung ausgeführt wird. Es kann mit diesem Verfahrensablauf der gesamte Flugzeugrumpf vom Heck bis zum Cockpit, vom Cockpit zum Heck oder nur ein bestimmter Rumpfteil, beispielsweise der gerade Bereich des Rumpfes, gefertigt werden. Mit einer Fertigung nur des geraden Flugzeugrumpfbereiches mit einer nachfolgenden Montage der Cockpit- und Hecksektion ist der Zugang von Mitarbeitern sowie das Zuführen von Material und Bauteilen zu den Ausrüstungs- und Austattungsbereichen 12 und 14 erleichert, da die Stirnseite einer solchen Rumpfsektion einen großen Öffnungs- und damit Zugangsbereich hat. Möglich ist auch, daß mit dem Anfügen einer neuen Rumpfsektion in der Nietzone 2 in der Ausrüstungszone 12 und der Ausstattungszone 14 nicht nur eine, sondern auch übergreifend mehrere nebeneinanderliegende Rumpfsektionen ausgerüstet und ausgestattet werden. Wesentlich für den erfinderischen Grundgedanken ist, daß es eine Überlappung der Fertigungsabläufe gibt und somit parallel die Arbeitsschritte ausgeführt werden.

### Bezugszeichenliste

- 1 -: Bauplatz
- 2 -: Nietzone
- 3 -: Orbitalnietanlage
- 4 -: Nietroboter
- 5 -: Schließkopfwerkzeug
- 6 -: Haltegestell
- 7 -: Tragarmständer
- 8 -: Tragarm
- 9 -: Ausgangsstruktur
- 10 -: erste Rumpfsektion
- 11 -: Rumpfteil
- 12 -: Ausrüstungszone
- 13 -: zweite Rumpfsektion
- 14 -: Ausstattungszone
- 15 -: dritte Rumpfsektion

## Patentansprüche

1. Verfahren zur Herstellung, Ausrüstung und Ausstattung eines Flugzeugrumpfes, wobei der Flugzeugrumpf aus mehreren Rumpfsektionen (9, 10, 13, 15) zusammengesetzt wird mit folgenden Merkmalen:
a) eine erste Rumpfsektion (10) wird einer automatischen Nietzone (2) eines Flugzeugrumpfbauplatzes (1) zugeführt, an dem die erste Rumpfsektion (10) an eine Ausgangsstruktur (9) angefügt wird,
b) die erste Rumpfsektion (10) wird aus der Nietzone (2) herausgefahren,
c) in die erste fertiggestellte Rumpfsektion (10) werden in einer Ausrüstungszone (12) Ausrüstungskomponenten eingebracht, wobei gleichzeitig in der Nietzone (2) eine zweite Rumpfsektion (13) an den bestehenden Flugzeugrumpfteil (11) angefügt wird,
d) nach Anfügen der zweiten Rumpfsektion (13) wird diese zweite Rumpfsektion (13) aus der Nietzone (2) in die Ausrüstungszone (12) verfahren und zwangsläufig die erste Rumpfsektion (10) in eine Flugzeugausstattungszone (14),
e) in der Flugzeugausstattungszone (14) werden Ausstattungskomponenten in die erste, bereits ausgerüstete Rumpfsektion (10) eingebracht, wobei gleichzeitig in der Ausrüstungszone (12) die zweite Rumpfsektion (13) ausgerüstet und gleichzeitig eine dritte Rumpfsektion (15) in der Nietzone (2) an den bestehenden Rumpf angefügt wird,
f) Schritte a) bis e) werden so oft wiederholt, bis der Flugzeugrumpf gefertigt, ausgerüstet und ausgestattet ist.

2. Verfahren nach Anspruch 1,
**dadurch gekennzeichnet, daß**
die zuvor geheftete Rumpfsektion (10, 13, 15) innerhalb der Nietzone (2) aus großflächigen Bauteilen zu Rumpfsektionen mittels Nieten der Längsnähte gefügt wird und danach an die Ausgangsstruktur (9) bzw. an einen fertig montierten Flugzeugrumpfteil (11) mittels Nieten der Quernaht angefügt wird.

3. Verfahren nach Anspruch 1,
**dadurch gekennzeichnet, daß**
die zuvor gefertigte Rumpfsektion (10, 13, 15) innerhalb der Nietzone (2) an die Ausgangsstruktur (9) bzw. an einen fertig montierten Flugzeugrumpfteil (11) mittels Nieten der Quemaht angefügt wird.

4. Verfahren nach einem der Ansprüche 1 bis 3
**dadurch gekennzeichnet, daß**
der gesamte Flugzeugrumpf mit Hecksektion bis Cockpitsektion gefertigt wird.

5. Verfahren nach einem der Ansprüche 1 bis 3
**dadurch gekennzeichnet, daß**
der gerade Flugzeugrumpfbereich gefertigt wird und die Hecksektion (9) und/oder Cockpitsektion in einem nachfolgenden Verfahrensschritt angefügt werden.

6. Verfahren nach einem der Ansprüche 1 bis 5
**dadurch gekennzeichnet, daß**
die Rumpfsektionen (10, 13, 15) in der Nietzone (2) mit einer Orbitalnietanlage (3) und einem Nietroboter (4), der innerhalb des Flugzeugrumpfes verfahren wird, bearbeitet werden.

7. Verfahren nach einem der Ansprüche 1 bis 6
**dadurch gekennzeichnet, daß**
in der Ausrüstungszone (12) Ausrüstungskomponenten wie Rohrleitungen und Geräte sowie Strukturkomponenten in den Flugzeugrumpfteil (11) bzw. in die Rumpfsektionen (10, 13, 15) eingebracht werden.

8. Verfahren nach einem der Ansprüche 1 bis 7
**dadurch gekennzeichnet, daß**
in der Ausstattungszone (15) Ausstattungskomponenten wie Isolierpakete, elektrische Leitungen, Wandverkleidungen und Fußböden in den Flugzeugrumpfteil (11) bzw. in die Rumpfsektion (10, 13, 15) eingebracht werden.

9. Verfahren nach einem der Ansprüche 1 bis 8
**dadurch gekennzeichnet, daß**
vor dem Einbringen von Ausrüstungskomponenten in der Ausrüstungszone (14) Sicherungselemente zur Abschirmung vom automatisch ablaufenden Nietverfahren in der Nietzone (2) zwischen den Rumpfsektionen (10, 13, 15) angeordnet werden.

10. Vorrichtung zur Durchführung des Verfahrens gemäß der vorangegangenen Ansprüche,
**dadurch gekennzeichnet, daß**
ein Flugzeugrumpfbauplatz (1) vorgesehen ist, der im wesentlichen aus drei benachbart angeordneten Zonen (2, 12, 14) besteht, wobei die erste Zone eine Nietzone (2), die zweite Zone eine Ausrüstungszone (12) und die dritte Zone eine Ausstattungszone (14) bildet.

11. Vorrichtung nach Anspruch 10,
**dadurch gekennzeichnet, daß**
die Nietzone (2) eine Nietvorrichtung bestehend aus einer Orbitalnietanlage (3) und einem innerhalb des Rumpfes (11) positionierbaren Nietroboter (4) aufweist.

12. Vorrichtung nach einem der Ansprüche 10 oder 11,
**dadurch gekennzeichnet, daß**
zwischen Nietzone (2) und den weiteren Zonen (12, 14) Sicherungselemente zur Abschirmung angeordnet sind.

## Claims

1. Method of manufacturing, equipping and fitting-out an aircraft fuselage, wherein the said aircraft fuselage is assembled from a number of fuselage sections (9, 10, 13, 15), the said method having the following features:
a) a first fuselage section (10) is fed to an automatic riveting zone (2) of an aircraft fuselage construction site (1) at which the said first fuselage section (10) is attached to an initial structure (9);
b) the first fuselage section (10) is moved out of the riveting zone (2);
c) equipping components are installed in the first completed fuselage section (10) in an equipping zone (12), a second fuselage section (13) being simultaneously attached to the existing part (11) of the aircraft fuselage in the riveting zone (2) ;
d) after the second fuselage section (13) has been attached, this second fuselage section (13) is conveyed out of the riveting zone (2) and into the equipping zone (12) and the first fuselage section (10) is automatically conveyed into an aircraft fitting-out zone (14);
e) in the aircraft fitting-out zone (14), fitting-out components are installed in the first fuselage section (10) which has already been equipped, the second fuselage section (13) being simultaneously equipped in the equipping zone (12) and a third fuselage section (15) being simultaneously attached to the existing fuselage in the riveting zone (2) ;
f) steps a) to e) are repeated until the aircraft fuselage is manufactured, equipped and fitted-out.

2. Method according to claim 1,
**characterised in that**
the previously fastened fuselage section (10, 13, 15) within the riveting zone (2), which section consists of components of large area, is joined to fuselage sections by riveting of the longitudinal seam, and is thereupon attached to the initial structure (9) or to a finally assembled part (11) of the aircraft fuselage by riveting of the transverse seam.

3. Method according to claim 1,
**characterised in that**
the previously manufactured fuselage section (10, 13, 15) within the riveting zone (2) is attached to the initial structure (9) or to a finally assembled part (11) of the aircraft fuselage by riveting of the transverse seam.

4. Method according to one of claims 1 to 3,
**characterised in that**
the entire aircraft fuselage with the rear section is manufactured as far as the cockpit section.

5. Method according to one of claims 1 to 3,
**characterised in that**
the straight region of the aircraft fuselage is manufactured, and the rear section (9) and/or cockpit section is/are attached in a subsequent step of the method.

6. Method according to one of claims 1 to 5,
**characterised in that**
the fuselage sections (10, 13, 15) in the riveting zone (2) are processed with an orbital riveting installation (3) and with a riveting robot (4) which is conveyed inside the aircraft fuselage.

7. Method according to one of claims 1 to 6,
**characterised in that**
equipping components such as pipelines and instruments and also structural components are installed in the part (11) of the aircraft fuselage or in the fuselage sections (10, 13, 15) in the equipping zone (12).

8. Method according to one of claims 1 to 7,
**characterised in that**
fitting-out components such as insulating packs, electrical lines, wall-panellings and floors are installed in the part (11) of the aircraft fuselage or in the fuselage section (10, 13, 15) in the fitting-out zone (15).

9. Method according to one of claims 1 to 8,
**characterised in that**
safety elements for screening against the riveting process, which runs its course automatically, are disposed in the riveting zone (2) between the fuselage sections (10, 13, 15) prior to the installation of equipping components in the equipping zone (14).

10. Device for performing the method according to preceding claims,
**characterised in that**
an aircraft fuselage construction site (1) is provided which essentially consists of three adjacently disposed zones (2, 12, 14), the first zone constituting a riveting zone (2), the second zone an equipping zone (12), and the third zone a fitting-out zone (14).

11. Device according to claim 10,
**characterised in that**
the riveting zone (2) has a riveting device consisting of an orbital riveting installation (3) and of a riveting robot (4) which can be positioned inside the fuselage (11).

12. Device according to one of claims 10 or 11,
**characterised in that**
safety elements for screening purposes are disposed between the riveting zone (2) and the other zones (12, 14).

## Revendications

1. Procédé pour la fabrication, l'équipement et l'installation d'un fuselage d'avion, le fuselage étant composé de plusieurs sections de fuselage (9, 10, 13, 15) avec les caractéristiques suivantes :
a) une première section de fuselage (10) est guidée vers une zone de rivetage automatique (2) d'un site de fabrication du fuselage d'avion (1), site dans lequel la première section de fuselage (10) est jointe à une structure de départ (9).
b) la première section de fuselage (10) est déployée à partir de la zone de rivetage (2),
c) dans une première zone d'équipement, des composantes d'équipement sont insérées dans la première section de fuselage (10) préparée, une deuxième section de fuselage (13) étant en même temps jointe à la partie de fuselage (11) existante, dans la zone de rivetage (2),
d) une fois la deuxième section de fuselage (13) jointe, cette deuxième section de fuselage (13) est déplacée de la zone de rivetage (2) jusque dans la zone d'équipement (12), entraînant par la force des choses le déplacement de la première section de fuselage (10) jusque dans une zone d'installation de l'avion (14),
e) des composantes d'équipement sont insérées dans la première section de fuselage (10) déjà équipée, dans la zone d'installation de l'avion (14), la deuxième section de fuselage (13) étant équipée simultanément dans la zone d'équipement (12) et une troisième section de fuselage (15) étant jointe en même temps au fuselage existant, dans la zone de rivetage (2),
f) les étapes a) à e) sont répétées aussi souvent que possible jusqu'à ce que le fuselage de l'avion ait été fabriqué, équipé et installé.

2. Procédé selon la revendication 1, **caractérisé en ce que** la section de fuselage (10, 13, 15) clouée préalablement à l'intérieur de la zone de rivetage (2) est, à partir d'éléments structuraux à grande surface, jointe à des sections de fuselage, à l'aide de rivets des coutures longitudinales, puis jointe à la structure de départ (9) ou à une partie de fuselage pré-assemblée (11), à l'aide de rivets de la couture transversale.

3. Procédé selon la revendication 1, **caractérisé en ce que** la section de fuselage (10, 13, 15) préalablement préparée à l'intérieur de la zone de rivetage (2) est jointe à la structure de départ (9) ou à une partie de fuselage d'avion (11) pré-assemblée, à l'aide de rivets de la couture transversale.

4. Procédé selon une des revendications 1 à 3,
**caractérisé en ce que** la totalité du fuselage de l'avion est préparé d'une section de queue jusque dans une section de cockpit.

5. Procédé selon une des revendications 1 à 3,
**caractérisé en ce que** la zone de fuselage droite de l'avion est préparée et **en ce que** les sections de queue (9) et/ou de cockpit sont assemblées dans une phase ultérieure.

6. Procédé selon une des revendications 1 à 5,
**caractérisé en ce que** les sections de fuselage (10, 13, 15) sont, dans la zone de rivetage (2), travaillées avec une installation de rivetage orbitale (3) et un robot de rivetage (4) déplacé à l'intérieur du fuselage de l'avion.

7. Procédé selon une des revendications 1 à 6,
**caractérisé en ce que**, dans la zone d'équipement (12), des composantes d'équipement comme des canalisations tubulaires et des appareils comme des composantes structurelles sont insérées dans la partie de fuselage de l'avion (11) ou dans les sections de fuselage (10, 13, 15).

8. Procédé selon une des revendications 1 à 7,
**caractérisé en ce que**, dans la zone d'installation (15), des composantes d'installation comme des paquets d'isolation, des conduites électriques, des revêtements de parois et des planchers sont insérés dans la partie de fuselage de l'avion (11) ou dans la section de fuselage (10, 13, 15).

9. Procédé selon une des revendications 1 à 8,
**caractérisé en ce que**, avant l'insertion de composantes d'équipement dans la zone d'équipement (14), des éléments de sécurité destinés à protéger du rivetage automatique sont disposés dans la zone de rivetage (2), entre les sections de fuselage (10, 13, 15).

10. Dispositif pour la réalisation du procédé conformément aux revendications précédentes et
**caractérisé en ce que** un site de fabrication de fuselage d'avion consistant essentiellement en trois zones voisines (2, 12, 14) a été prévu, la première zone formant une zone de rivetage (2), la deuxième zone une zone d'équipement (12) et la troisième zone une zone d'installation (14).

11. Dispositif selon la revendication 10, **caractérisé en ce que** la zone de rivetage (2) présente un dispositif de rivetage constitué d'une installation de rivetage orbitale (3) et d'un robot de rivetage (4) pouvant être disposé à l'intérieur du fuselage (11).

12. Dispositif selon une des revendications 10 ou 11,
**caractérisé en ce que** des éléments de sécurité destinés à protéger ont été disposés entre la zone de rivetage (2) et les autres zones (12, 14).
